# EUROPÄISCHE PATENTSCHRIFT

(11) **EP 1 114 935 B1**
(45) Veröffentlichungstag und Bekanntmachung des Hinweises auf die Patenterteilung: **07.09.2005**
(21) Anmeldenummer: 00125649.4
(22) Anmeldetag: 23.11.2000
(51) Int. Cl.: E04B 9/16, F16B 7/04, F16B 7/18, E04B 9/12

(54) **Knotenverbinder zum Befestigen einer Montageschiene auf Stoss an einer anderen Montageschiene**
Angle joint to perpendicularly connect a support rail to another support
Noeud d'assemblage pour perpendiculairement connecter un rail de mountage à un autre support

(30) Priorität: 04.01.2000 DE 10000092
(43) Veröffentlichungstag der Anmeldung: 11.07.2001
(73) Patentinhaber: fischerwerke Artur Fischer GmbH & Co. KG, 72178 Waldachtal (DE)
(72) Erfinder: Beck, Herbert, 74221 Haiterbach (DE); Frischmann, Albert, 79341 Kenzingen (DE); Lind, Stefan, 72178 Waldachtal (DE); Mäder, Hans-Martin, 72178 Waldachtal (DE); Neumar, Gunter, 72285 Pfalzgrafenweiler (DE); Prange, Joachim, 79353 Bahlingen (DE)

(56) Entgegenhaltungen:
- DE-C- 19 507 715
- DE-U- 7 710 126
- FR-A- 2 124 047
- FR-A- 2 194 854
- US-A- 5 100 086

## Beschreibung

Die Erfindung betrifft eine Knotenverbindung und einen Knotenverbinder zum Befestigen einer Montageschiene auf Stoß an einer anderen Montageschiene mit den Merkmalen der Oberbegriffe der Ansprüche 1 und 9.

Montageschienen sind an sich bekannt. Sie sind üblicherweise als Rechteckrohrprofile mit einem durchgehenden Längsschlitz auf einer Seite und vielfach einer Lochreihe auf einer gegenüberliegenden Seite ausgebildet. Die Montageschienen werden parallel zueinander und mit Abstand voneinander beispielsweise an einer Decke festgeschraubt um auf einfache Weise quer zu den Montageschienen verlaufende Rohre, Leitungen oder dgl. an den Montageschienen und damit an der Decke befestigen zu können.

Aus der FR-A-2 124 047 ist ein Knotenverbinder bekannt, der als U-förmiges Blech mit Aussparungen für eine Montageschiene in den Seitenwänden ausgebildet ist. Der Knotenverbinder wird mit seinen Aussparungen auf eine durchgehende Montageschiene aufgesetzt und übergreift mit seiner U-Form auf Stoß angeordnete Montageschienen, die er an der einen Montageschiene sichert.

Einen anderen Knotenverbinder offenbart die DE-U-77 10 126. Dieser Knotenverbinder weist zwei quadratische Blechformteile auf, die von oben und von unten auf die zu verbindenden Montageschienen aufgesetzt werden.

Bei den bekannten Knotenverbindern ist die Verbindung der Montageschienen dadurch erschwert, dass die auf Stoß angeordneten Montageschienen nicht einfach auf den Knotenverbinder auf- oder in ihn einlegbar sind und dort vorläufig halten, bis sie festgeklemmt oder in sonstiger Weise gesichert werden.

Der Erfindung liegt die Aufgabe zu Grunde, eine Knotenverbindung und einen Knotenverbinder für derartige Montageschienen vorzuschlagen, die/der eine einfache Befestigung einer Montageschiene auf Stoß an einer anderen Montageschiene ermöglicht.

Diese Aufgabe wird erfindungsgemäß durch die Merkmale der Ansprüche 1 und 9 gelöst. Die erfindungsgemäße Knotenverbindung weist einen Knotenverbinder mit einer U-förmigen Verbindungseinrichtung auf, mit der er von oben auf die andere Montageschiene aufsetzbar bzw. in die Montageschiene von unten einsetzbar ist. Zum festen Verbinden wird die Montageschiene beispielsweise mit dem Knotenverbinder verschraubt oder festgeklemmt. Des weiteren weist der erfindungsgemäße Knotenverbinder eine Aufnahme auf, in die die eine, auf Stoß an der anderen Montageschiene zu befestigende Montageschiene einlegbar ist. Die Aufnahme ist ebenfalls U-förmig und in entgegengesetzter Richtung offen wie die U-förmige Verbindungseinrichtung. Ist eine offene Seite der U-förmigen Verbindungseinrichtung nach unten gerichtet, dann ist die offene Seite der U-förmigen Aufnahme oben. Die Erfindung hat den Vorteil, dass die auf Stoß an der anderen Montageschiene zu befestigende Montageschiene durch einfaches Einlegen in die Aufnahme des Knotenverbinders ohne Werkzeug befestigbar ist, wobei die Montageschiene später beispielsweise durch Verschrauben mit der Aufnahme gesichert werden kann.

In bevorzugter Ausgestaltung der Erfindung weist der Knotenverbinder zwei Aufnahmen an einander abgewandten Seiten auf, um zwei Montageschienen im Kreuzstoß an einer anderen Montageschiene befestigen zu können.

Bei einer Ausgestaltung der Erfindung ist es vorgesehen, die Verbindungseinrichtung als Schraubverbindungseinrichtung auszubilden, d. h. den Knotenverbinder mit der Montageschiene zu verschrauben.

Zur Sicherung der Montageschiene am Knotenverbinder weist der Knotenverbinder bei einer Ausgestaltung der Erfindung eine Hinterschneidung auf, die von einem Bügel hintergriffen ist, der am Knotenverbinder befestigt ist und die Montageschiene so übergreift, dass sie nicht aus der beispielsweise U-förmigen Aufnahme entnommen werden kann. Ein solcher Bügel ist nicht nur an der Aufnahme sondern prinzipiell auch an der Verbindungseinrichtung möglich.

Bei einer Ausgestaltung der Erfindung ist eine Klemmeinrichtung zum Festklemmen der Montageschiene am Knotenverbinder vorgesehen. Die Klemmeinrichtung weist bei einer Ausgestaltung der Erfindung ein Exzenterelement auf, mit dem die Montageschiene in der Aufnahme oder der Verbindungseinrichtung festklemmbar ist. Das Exzenterelement kann bei Ausgestaltungen der Erfindung am vorstehend erläuterten Bügel angebracht sein. Eine weitere Ausgestaltung der Erfindung sieht als Exzenterelement einen rechteckigen Vierkant vor, der im Längsschlitz der Montageschiene einliegt. Dabei ist eine Breite des Vierkants nicht größer als eine lichte Weite des Längsschlitzes der Montageschiene, so dass in einer Lösestellung des Exzenterelements die Montageschiene von dessen Vierkant nicht verformt wird. Wird das Exzenterelementum 90 ° in eine Spannstellung gedreht, drückt sein Vierkant die Montageschiene in deren Längsschlitz seitlich auseinander und klemmt dadurch die Montageschiene in der Aufnahme oder der Verbindungseinrichtung des Knotenverbinders fest.

Bei einer Ausgestaltung der Erfindung ist eine Klemmschraube zum Festklemmen der Montageschiene in der Aufnahme vorgesehen. Prinzipiell kann auch die Verbindungseinrichtung des Knotenverbinders eine Klemmschraube zum Festklemmen des Knotenverbinders an der Montageschiene aufweisen.

Die Erfindung wird nachfolgend anhand eines in der Zeichnung dargestellten Ausführungsbeispiels näher erläutert. Es zeigen:
- Figur 1: einen erfindungsgemäßen Knotenverbinder in perspektivischer Darstellung;
- Figur 2: eine mit dem Knotenverbinder aus Figur 1 hergestellte Knotenverbindung von Montageschienen;
- Figur 3: einen Bügel des Knotenverbinders aus Figur 1 in perspektivischer Darstellung;
- Figur 4: einen Hebel zu dem in Figur 3 dargestellten Bügel in perspektivischer Darstellung;
- Figur 5: den Hebel aus Figur 4 in Seitenansicht;
- Figur 6: eine abgewandelte Ausführungsform des Knotenverbinders aus Figur 1 in perspektivischer Darstellung;
- Figur 7: ein Exzenterelement des Knotenverbinders aus Figur 6 in größerer Darstellung;
- Figur 8: einen Querschnitt des Exzenterelements aus Figur 7; und
- Figur 9: eine weitere abgewandelte Ausführungsform des Knotenverbinders aus Figur 1 in Seitenansicht.

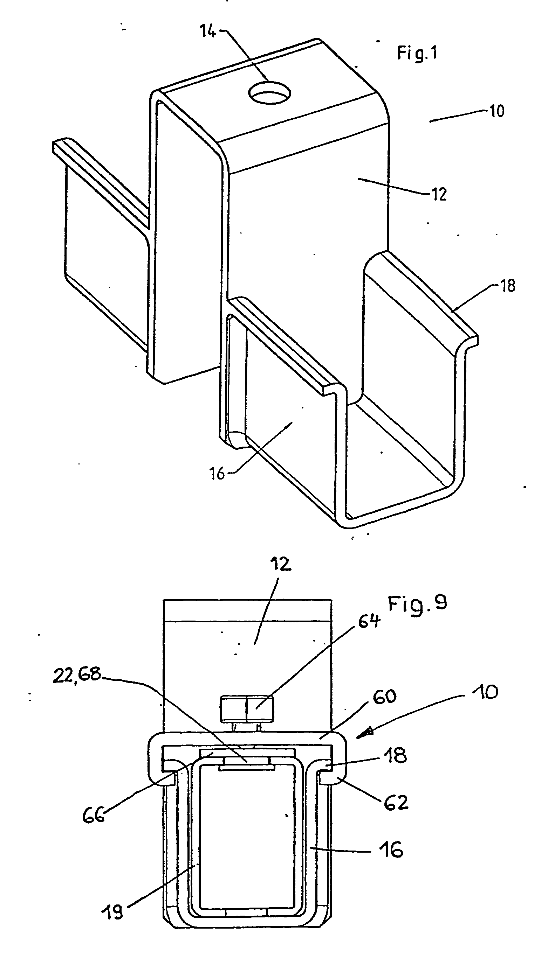

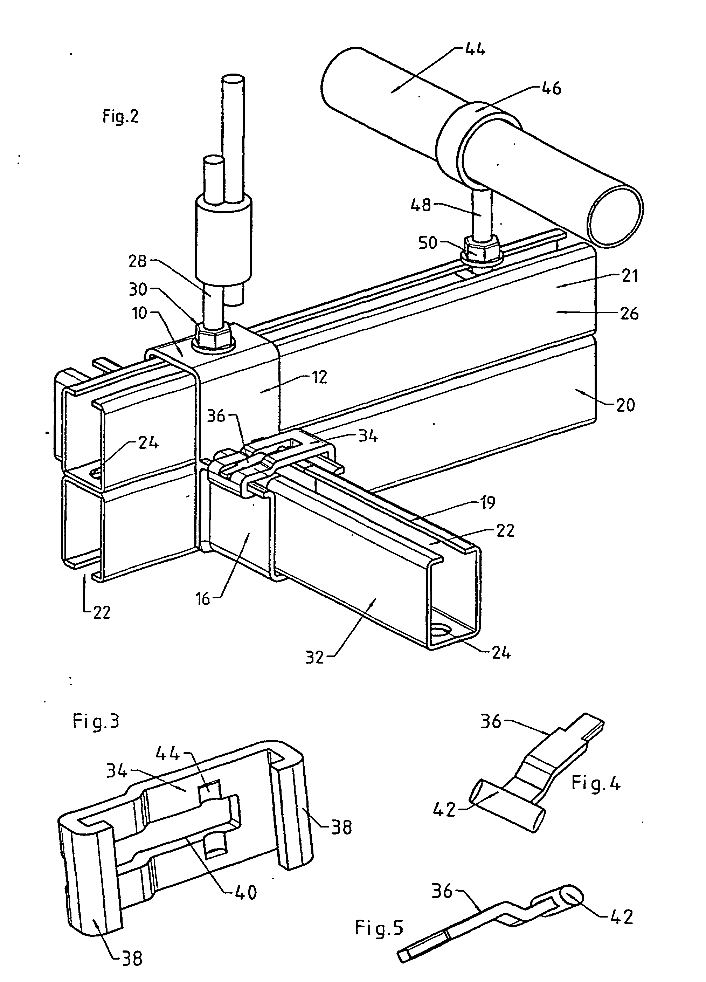

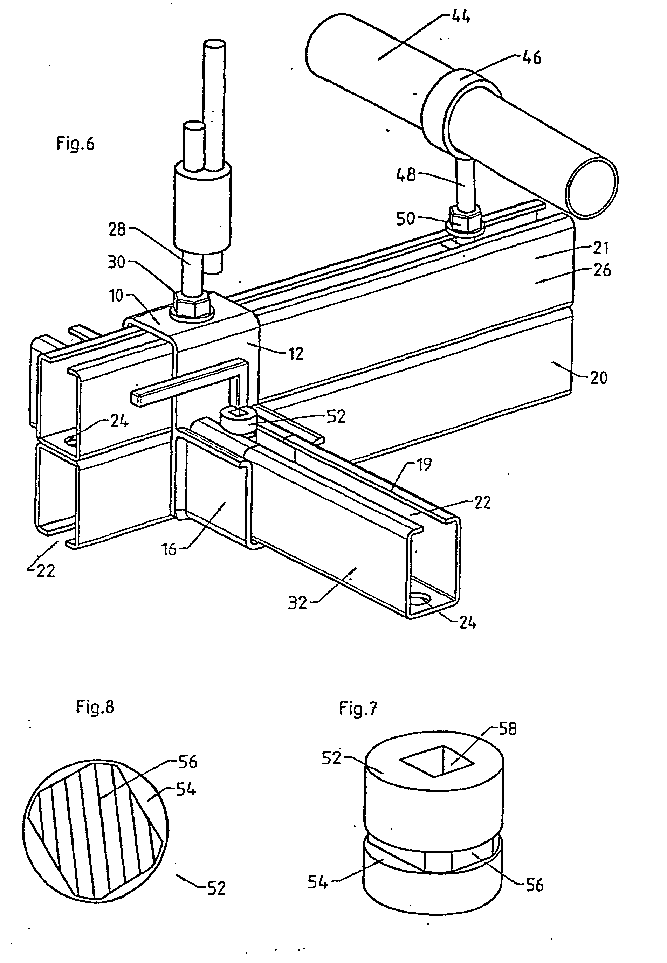

Der in Figur 1 dargestellte, erfindungsgemäße Knotenverbinder 10 weist ein U-förmiges Mittelteil 12 auf, welches eine Verbindungseinrichtung 12 des Knotenverbinders 10 bildet. In der Mitte einer Jochwand der U-förmigen Verbindungseinrichtung 12 ist ein Loch 14 angebracht. Von beiden Schenkelwänden der Verbindungseinrichtung 12 stehen U-förmige Aufnahmen 16 nach außen ab. Die Aufnahmen 16 haben im dargestellten Ausführungsbeispiel etwa die halbe Höhe der Verbindungseinrichtung 12. Die Aufnahmen 16 sind an freien Enden der Schenkelwände der Verbindungseinrichtung 12 angeordnet. Die Aufnahmen 16 sind zur Jochwand der Verbindungseinrichtung 12 hin offen, es sind also die U-förmigen Aufnahmen 16 in entgegengesetzter Richtung offen wie die U-förmige Verbindungseinrichtung 12. Freie Ränder 18 der Aufnahmen 16 sind um 90 ° nach außen gebogen, sie bilden Hinterschneidungen18.

Der erfindungsgemäße Knotenverbinder 10 ist wie in Figur 2 dargestellt zum Verbinden von im Kreuzstoß angeordneten Montageschienen 19, 20,21 vorgesehen. Die Montageschienen 19, 20,21 sind an sich bekannt. Sie sind als Vierkant-Rohrprofile mit einem durchgehenden Längsschlitz 22 in einer und einer Lochreihe 24 in einer gegenüberliegenden Längswand versehen. Im dargestellten Ausführungsbeispiel werden zwei der Montageschienen 20, 21 als Längsträger 26 mit ihren mit den Lochreihen 24 versehenen Längswänden aneinander liegen miteinander verbunden. Die Verbindung kann beispielweise durch Schrauben oder Nieten, ggf. auch durch Schweißen erfolgen. Durch die Verbindung der beiden Montageschienen 20, 21 erhält man einen stabilen Längsträger 26 mit Längsschlitzen 22 an Ober- und Unterseite.

Auf den Längsträger 26 ist die Verbindungseinrichtung 12 des Knotenverbinders 10 aufgesetzt. Die U-förmige Verbindungseinrichtung 12 weist etwa die Höhe des Längsträgers 26, also die Höhe von zwei Montageschienen 20,21 und die Breite des Längsträgers 26, also einer Montageschiene 20, 21 auf.

Zur abgehängten Befestigung des Längsträgers 26 unter einer nicht dargestellten Decke wird ein an der Decke befestigter Abhängeanker 28 mit dem Längsträger 26 verbunden. Der Abhängeanker 28 wird dazu durch das Loch 14 der Verbindungseinrichtung 12 durchgesteckt. Der Abhängeanker 28 weist einen an sich bekannten Hammerkopf an seinem Ende auf, der quergestellt die mit dem Längsschlitz 22 versehene Längswand der Montageschiene 21 seitlich des Längsschlitzes 22 hintergreift. Wird der Hammerkopf um 90 ° verdreht in Längsrichtung der Montageschiene 21 ausgerichtet, lässt er sich durch deren Längsschlitz 22 ein- und ausführen. Auf eine Außenseite der Jochwand der Verbindungseinrichtung 12 ist eine Klemmmutter 30 auf den Abhängeanker 28 aufgeschraubt, mit der der Abhängeanker 28 in der oberen Montageschiene 21 des Längsträgers 26 festklemmbar ist. Solange die Klemmmutter 30 nicht festgezogen ist, lässt sich der Längsträger 26 bzw. der Knotenverbinder 10 in Längsrichtung des Längsträgers 26 verschieben.

Nach der abgehängten Befestigung der beiden Längsträger 26 bildeten Montageschienen 20, 21 unter der nicht dargestellten Decke werden einzelne Montageschienen 19 als Querträger 32 in die U-förmigen Aufnahmen 16 des Knotenverbinders 10 eingelegt. Die Querträger 32 sind rechtwinklig auf Stoß zu den Längsträgern 26 angeordnet. Im dargestellten Ausführungsbeispiel befinden sich die Querträger 32 in einer Ebene mit der unteren Montageschiene 20 des Längsträgers 26. Mit dem erfindungsgemäßen Knotenverbinder 10 lässt sich auf einfache Weise ein Gerüst aus rechteckgitterförmig längs und quer angeordneten Montageschienen 19,20,21 herstellen, das unter einer Decke abgehängt befestigt ist. Figur 2 zeigt einen Knotenpunkt eines solchen Gerüsts. In Figur 2 ist der Längsschlitz 22 der den Querträger 32 bildenden Montageschiene 19 nach oben gerichtet.

Zur Sicherung des Querträgers 32 in der Aufnahme 16 des erfindungsgemäßen Knotenverbinders 10 weist dieser eine Klemmeinrichtung 34, 36 auf, die einen Bügel 34 (Figur 3) und einen Hebel 36 (Figuren 4 und 5) umfasst. Der Bügel 34 überdeckt die Montageschiene 19 an einer offenen Seite der U-förmigen Aufnahme 16. Der Bügel 34 weist an seinen beiden Enden Haken 38 auf, mit denen er die nach außen gebogenen Ränder 18 der Aufnahme 16 umgreift und die von den Rändern 18 gebildeten Hinterschneidungen der Aufnahme 16 hintergreift. Durch den Hintergriff ist der Bügel 34 an der Aufnahme 16 befestigt. Der Bügel 34 weist einen an beiden Enden geschlossenen Längsschlitz 40 auf, in dem der Hebel 36 einliegt. Der Hebel 36 weist eine Welle 42 an seinem einen Ende auf, die in halbkreisförmigen Nuten 44 beiderseits eines Endes des Längsschlitzes 40 im Bügel 34 schwenkbar aufgenommen ist. Die Welle 42 des Hebels 36 hat einen elliptischen Querschnitt, ihre gedachten Halbachsen sind schräg stehend zum Hebel 36 angeordnet. Die Welle 42 bildet ein Exzenterelement des Hebels 36. In der in Figur 2 dargestellten, im Schlitz 40 des Bügels 34 einliegenden Stellung des Hebels 36 klemmt dessen Welle 42 die Montageschiene 19 in der Aufnahme 16 des Knotenverbinders 10 fest. Durch Schwenken des Hebels 36 um ca. 130 ° nach oben wird die Klemmung gelöst, eine wirksame Höhe der im Querschnitt elliptischen Welle 42 ist in der um 130 ° nach oben geschwenkten Stellung des Hebels 36 geringer. Um den Hebel 36 schwenken zu können ist sein von der Welle 42 abstehendes Ende verjüngt, um ein nicht dargestelltes Rohr aufstecken zu können.

An dem aus den Längsträgern 26 und Querträgern 32 gebildeten Gerüst lassen sich mühelos Installationen in sog. Aufsteckmontage oder abgehängt anbringen. Die Aufsteckmontage ist in Figur 2 anhand eines Rohrs 44 dargestellt, das in einer Rohrschelle 46 befestigt ist. Die Rohrschelle 46 ist in an sich bekannter Weise mit einer Hammerkopfschraube 48 im Längsschlitz 22 auf der Oberseite des Längsträgers 26 befestigt und mit einer Klemmmutter 50 festgeklemmt. Bis zum Festziehen der Klemmmutter 50 lässt sich das Rohr 44 in Längsrichtung des Längsträgers 26 verschieben. Eine Aufsteckmontage ist in gleicher Weise auf den Querträgern 32 möglich (nicht dargestellt). Eine Abhängung ist in gleicher Weise wie die Aufsteckmontage im unteren Längsschlitz 22 des Längsträgers 26 oder in den Löchern 24 der Lochreihe des Querträgers 32 möglich.

Figur 6 zeigt eine Figur 2 entsprechende Knotenverbindung mit einem abgewandelten, erfindungsgemäßen Knotenverbinder 10. Gleiche Bauteile werden nachfolgend mit gleichen Bezugszahlen wie in Figuren 1 und 2 bezeichnet. Bei dem in Figur 6 dargestellten Knotenverbinder 10 fehlen im Vergleich zu Figuren 1 und 2 die nach außen gebogenen Ränder 18 der Aufnahmen 16, im übrigen ist der Knotenverbinder 10 mit der Verbindungseinrichtung 12 für den Längsträger 26 und den beiden Aufnahmen 16 für die Querträger 32 übereinstimmend mit dem in Figuren 1 und 2 dargestellten Knotenverbinder 10 ausgebildet. Wesentlicher Unterschied des Klemmverbinders 10 aus Figur 6 ist dessen Klemmeinrichtung 52, die ein im wesentlichen zylinderförmiges, ebenfalls mit 52 bezeichnetes Exzenterelement aufweist. Dieses in Figur 7 größer dargestellte Exzenterelement 52 weist einen zylinderförmigen Grundkörper mit einer umlaufenden Nut 54 auf. Ein Nutgrund wird von einem Vierkant 56 gebildet, der im Schnitt in Figur 8 zu sehen ist. Figur 8 zeigt einen Querschnitt durch das zylinderförmige Exzenterelement 52 in dessen Nut 54. Der Vierkant 56 des Exzenterelements 52 weist eine rechteckige Form mit abgeschrägten Ecken auf. Eine Breite des Vierkants 56 ist nicht größer als eine lichte Weite des Längsschlitzes 22 der Montageschiene 19 in unverformtern Zustand. Eine Länge des Vierkants 56 ist größer als die lichte Weite des Längsschlitzes 22 bei unverformter Montageschiene 19. Das Exzenterelement 52 ist mit seiner Nut 54 in den Längsschlitz 22 der den Querträger 22 bildenden Montageschiene 19 eingesetzt. Ist der Vierkant 56 des Exzenterelements 52 in Längsrichtung des Längsschlitzes 22 ausgerichtet, lässt sich die Montageschiene 19 in die Aufnahme 16 des Knotenverbinders 10 einlegen. Wird das Exzenterelement 52 um 90 ° gedreht, drückt der Vierkant 56 des Exzenterelements 52 die Montageschiene 19 an ihrem Längsschlitz 22 auseinander und klemmt auf diese Weise die Montageschiene 19 in der Aufnahme 16 des Knotenverbinders 10 fest. Zum Drehen ist das Exzenterelement 52 mit einer Inbusaufnahme 58 versehen.

Figur 9 zeigt den Knotenverbinder 10 gemäß Figur 1 von der Seite, d. a. in Stirnansicht auf die Aufnahme 16 zum Einlegen der auf Stoß mit dem Knotenverbinder 10 zu verbindende Montageschiene 19. Der in Figur 9 dargestellte Knotenverbinder 10 ist gleich ausgebildet wie der in Figur 1 dargestellte Knotenverbinder 10, seine Aufnahme 16 weist ebenfalls die um 90 ° nach außen gebogenen freien Ränder 18 auf, die Hinterschneidungen 18 bilden. Auf eine freie Oberseite der U-förmigen Aufnahme 16 ist ein Bügel 60 aufgesetzt, der mit seinen hakenförmigen Enden 62 die Hinterschneidungen 18 hintergreift. Der Bügel 60 ist mit einem in der Zeichnung nicht sichtbaren Gewindeloch in seiner Mitte versehen, in die eine Klemmschraube 64 eingedreht ist. In den Längsschlitz 22 der Montageschiene 19 ist ein scheibenförmiges, zylindrisches Zwischenlegteil 66, das eine umlaufende Nut 68 aufweist, eingeschoben. Das Zwischenlegteil 66 liegt auf einer Oberseite der Montageschiene 19 auf. Die Klemmschraube 64 sitzt auf dem Zwischenlegteil 66 auf. Durch Anziehen der Klemmschraube 64 ist die Montageschiene 19 in der Aufnahme 16 des Knotenverbinders 10 festklemmbar.

## Patentansprüche

1. Knotenverbinder zum Befestigen einer Montageschiene (19) auf Stoß an einer anderen Montageschiene (20,21), wobei der Knotenverbinder (10) eine Verbindungseinrichtung (12) aufweist, mit der der Knotenverbinder (10) mit der anderen Montageschiene (20,21) verbindbar ist, und wobei der Knotenverbinder (10) eine Aufnahme (16) aufweist, in die die eine auf Stoß an der anderen Montageschiene (20,21) zu befestigende Montageschiene (19) einlegbar ist, **dadurch gekennzeichnet, dass** die Verbindungseinrichtung (12) U-förmig zum Einlegen der anderen Montageschiene (20, 21) ausgebildet ist, dass die Aufnahme (16) zum Einlegen der einen Montageschiene (19) U-förmig ausgebildet ist, und dass die U-förmige Aufnahme (16) in entgegengesetzter Richtung offen ist wie die U-förmige Verbindungseinrichtung (12).

2. Knotenverbinder nach Anspruch 1, **dadurch gekennzeichnet, dass** der Knotenverbinder (10) zwei Aufnahmen (16) an voneinander abgewandten Seiten aufweist.

3. Knotenverbinder nach Anspruch 1, **dadurch gekennzeichnet, dass** die Verbindungseinrichtung (12) mit der anderen Montageschiene (21) verschraubbar ist.

4. Knotenverbinder, nach Anspruch 1, **dadurch gekennzeichnet, dass** der Knotenverbinder (10) zum Befestigen der Montageschiene (19) eine Hinterschneidung (18) und einen Bügel (34, 60) aufweist, der die Hinterschneidung (18) hintergreifend am Knotenverbinder (10) befestigt ist und die Montageschiene (19) übergreift.

5. Knotenverbinder nach Anspruch 1, **dadurch gekennzeichnet, dass** der Knotenverbinder (10) eine Klemmeinrichtung (34, 36; 52; 60, 64, 66) zum Festklemmen der Montageschiene (19) aufweist.

6. Knotenverbinder nach Anspruch 5, **dadurch gekennzeichnet, dass** die Klemmeinrichtung (34, 36, 52) ein Exzenterelement (42; 56) zum Festklemmen der Montageschiene (19) aufweist.

7. Knotenverbinder nach Anspruch 6, **dadurch gekennzeichnet, dass** das Exzenterelement (42) an dem Bügel (34) angebracht ist.

8. Knotenverbinder nach Anspruch 7, **dadurch gekennzeichnet, dass** der Knotenverbinder (10) eine Klemmschraube (64) aufweist, die in den Bügel (60) eingeschraubt und mit der die Montageschiene (19) festklemmbar ist.

9. Knotenverbindung mit einem Knotenverbinder (10) und mit zwei Montageschienen (19, 20, 21), deren eine Montageschiene (19) mit dem Knotenverbinder (10) auf Stoß an der anderen Montageschiene (20, 21) befestigt ist, wobei der Knotenverbinder (10) eine Verbindungseinrichtung (12) aufweist, mit der der Knotenverbinder (10) mit der anderen Montageschiene (20, 21) verbunden ist, und wobei der Knotenverbinder (10) eine Aufnahme (16) aufweist, in die die eine auf Stoß an der anderen Montageschiene (20, 21) befestigte Montageschiene (19) eingelegt ist, **dadurch gekennzeichnet, dass** die Verbindungseinrichtung (12) U-förmig zum Einlegen der anderen Montageschiene (20, 21) ausgebildet ist, dass die Aufnahme (16) zum Einlegen der einen Montageschiene (19) U-förmig ausgebildet ist, und dass die U-förmige Aufnahme (16) in entgegengesetzter Richtung offen ist wie die U-förmige Verbindungseinrichtung (12).

10. Knotenverbindung nach Anspruch 9, **dadurch gekennzeichnet, dass** die Knotenverbindung drei Montageschienen (19 ,20, 21) aufweist, die mit dem Knotenverbinder (10) im Kreuzstoß aneinander befestigt sind, und dass der Knotenverbinder (10) zwei Aufnahmen (16) an voneinander abgewandten Seiten aufweist, in denen zwei der Montageschienen (19) auf voneinander abgewandten Seiten der anderen Montageschiene (20, 21) einliegen, und dass die beiden U-förmigen Aufnahmen (16) in entgegengesetzter Richtung offen sind wie die U-förmige Verbindungseinrichtung (12).

11. Knotenverbindung nach Anspruch 9, **dadurch gekennzeichnet, dass** die Verbindungseinrichtung (12) mit der anderen Montageschiene (21) verschraubt ist.

12. Knotenverbindung, nach Anspruch 9, **dadurch gekennzeichnet, dass** der Knotenverbinder (10) zum Befestigen der Montageschiene (19) eine Hinterschneidung (18) und einen Bügel (34, 60) aufweist, der die Hinterschneidung (18) hintergreifend am Knotenverbinder (10) befestigt ist und die Montageschiene (19) übergreift.

13. Knotenverbindung nach Anspruch 9, **dadurch gekennzeichnet, dass** der Knotenverbinder (10) eine Klemmeinrichtung (34, 36; 52; 60, 64, 66) zum Festklemmen der Montageschiene (19) aufweist.

14. Knotenverbindung nach Anspruch 13, **dadurch gekennzeichnet, dass** die Klemmeinrichtung (34, 36, 52) ein Exzenterelement (42; 56) zum Festklemmen der Montageschiene (19) aufweist.

## Claims

1. Node connector for fastening a mounting rail (19) in abutting relationship at another mounting rail (20, 21), the node connector (10) having a connection device (12), by means of which the node connector (10) is arranged to be connected to said another mounting rail (20, 21), and the node connector (10) having a receiving portion (16), into which the first mounting rail (19), to be fastened in abutting relationship at said another mounting rail (20, 21), is arranged to be inserted, **characterised in that** the connection device (12) is of U-shaped construction for insertion of said another mounting rail (20, 21); the receiving portion (16) for insertion of the first mounting rail (19) is of U-shaped construction; and the U-shaped receiving portion (16) is open in the opposite direction to the U-shaped connection device (12).

2. Node connector according to claim 1, **characterised in that** the node connector (10) has two receiving portions (16) at sides remote from one another.

3. Node connector according to claim 1, **characterised in that** the connection device (12) is arranged to be screwed to said another mounting rail (21).

4. Node connector according to claim 1, **characterised in that** the node connector (10) has, for fastening the mounting rail (19), an undercut (18) and a fixing plate (34, 60) which is fastened to the node connector (10) so that it engages behind the undercut (18) and which engages over the mounting rail (19).

5. Node connector according to claim 1, **characterised in that** the node connector (10) has a clamping device (34, 36; 52; 60, 64, 66) for firmly clamping the mounting rail (19).

6. Node connector according to claim 5, **characterised in that** the clamping device (34, 36, 52) has an eccentric element (42; 56) for firmly clamping the mounting rail (19).

7. Node connector according to claim 6, **characterised in that** the eccentric element (42) is attached to the fixing plate (34).

8. Node connector according to claim 7, **characterised in that** the node connector (10) has a clamping screw (64), which is screwed into the fixing plate (60) and by means of which the mounting rail (19) can be firmly clamped.

9. Node connection having a node connector (10) and two mounting rails (19, 20, 21), of which one mounting rail (19) is fastened by means of the node connector (10) in abutting relationship at the other mounting rail (20, 21), the node connector (10) having a connection device (12), by means of which the node connector (10) is connected to said other mounting rail (20, 21), and the node connector (10) having a receiving portion (16), into which the first mounting rail (19), fastened in abutting relationship at said other mounting rail (20, 21), is inserted, **characterised in that** the connection device (12) is of U-shaped construction for insertion of said other mounting rail (20, 21); the receiving portion (16) for insertion of the first mounting rail (19) is of U-shaped construction; and the U-shaped receiving portion (16) is open in the opposite direction to the U-shaped connection device (12).

10. Node connection according to claim 9, **characterised in that** the node connection has three mounting rails (19, 20, 21), which are fastened by means of the node connector (10) in crosswise abutting relationship at one another; the node connector (10) has two receiving portions (16) at sides remote from one another, in which two of the mounting rails (19) are located on sides of said other mounting rail (20, 21) which are remote from one another; and the two U-shaped receiving portions (16) are open in the opposite direction to the U-shaped connection device (12).

11. Node connection according to claim 9, **characterised in that** the connection device (12) is screwed to said other mounting rail (21).

12. Node connection according to claim 9, **characterised in that** the node connector (10) has, for fastening the mounting rail (19), an undercut (18) and a fixing plate (34, 60) which is fastened to the node connector (10) so that it engages behind the undercut (18) and which engages over the mounting rail (19)

13. Node connection according to claim 9, **characterised in that** the node connector (10) has a clamping device (34, 36; 52; 60, 64, 66) for firmly clamping the mounting rail (19).

14. Node connection according to claim 13, **characterised in that** the clamping device (34, 36, 52) has an eccentric element (42; 56) for firmly clamping the mounting rail (19).

## Revendications

1. Raccord à noeuds destiné à fixer un rail de montage (19) bord à bord sur un autre rail de montage (20, 21), le raccord à noeuds (10) comprenant un système de raccordement (12), avec lequel le raccord à noeuds (10) peut être raccordé à l'autre rail de montage (20, 21), et le raccord à noeuds (10) comprenant une réception (16), dans laquelle peut être logé un des rails de montage (19) destiné à être fixé bord à bord sur l'autre rail de montage (20, 21), **caractérisé en ce que** le système de raccordement (12) est conçu en forme de U pour introduire l'autre rail de montage (20, 21), **en ce que** la réception (16) destinée à loger un des rails de montage (19) est conçue en forme de U, et **en ce que** la réception en forme de U (16) est ouverte dans la direction opposée, de la même façon que le système de raccordement en forme de U (12).

2. Raccord à noeuds selon la revendication 1, **caractérisé en ce que** le raccord à noeuds (10) comprend deux réceptions (16) sur les côtés opposés l'un à l'autre.

3. Raccord à noeuds selon la revendication 1, **caractérisé en ce que** le système de raccordement (12) peut être vissé à l'autre rail de montage (21).

4. Raccord à noeuds selon la revendication 1, **caractérisé en ce que** le raccord à noeuds (10) destiné à fixer le rail de montage (19) comprend une contre-dépouille (18) et une boucle (34, 60), qui fixe la contre-dépouille (18) par mise en prise sur le raccord à noeuds (10) et chevauche le rail de montage (19).

5. Raccord à noeuds selon la revendication 1, **caractérisé en ce que** le raccord à noeuds (10) comprend un système de serrage (34, 36 ; 52 ; 60, 64, 66) destiné à serrer fixement le rail de montage (19).

6. Raccord à noeuds selon la revendication 5, **caractérisé en ce que** le système de serrage (34, 36, 52) comprend un élément excentrique (42 ; 56) destiné à serrer fixement le rail de montage (19).

7. Raccord à noeuds selon la revendication 6, **caractérisé en ce que** l'élément excentrique (42) est aménagé sur la boucle (34).

8. Raccord à noeuds selon la revendication 7, **caractérisé en ce que** le raccord à noeuds (10) comprend une vis de serrage (64), qui peut être vissée dans la boucle (60) et avec laquelle le rail de montage (19) peut être serré fixement.

9. Raccordement à noeuds comprenant un raccord à noeuds (10) et comprenant deux rails de montage (19, 20, 21), dont un rail de montage (19) est fixé au raccord à noeuds (10) bord à bord sur l'autre rail de montage (20, 21), le raccord à noeuds (10) comprenant un système de raccordement (12), avec lequel le raccord à noeuds (10) est raccordé à l'autre rail de montage (20, 21), et le raccord à noeuds (10) comprenant une réception (16), dans laquelle est logé un des rails de montage (20, 21) fixé bord à bord sur l'autre rail de montage (19), **caractérisé en ce que** le système de raccordement (12) est conçu en forme de U pour loger l'autre rail de montage (20, 21), **en ce que** la réception (16) destinée à loger un des rails de montage (19) est conçue en forme de U, et **en ce que** la réception en forme de U (16) est ouverte dans la direction opposée de la même façon que le système de raccordement en forme de U (12).

10. Raccordement à noeuds selon la revendication 9, **caractérisé en ce que** le raccordement à noeuds comprend trois rails de montage (19, 20, 21), qui sont fixés les uns sur les autres avec le raccord à noeuds (10) en assemblage en croix, et **en ce que** le raccord à noeuds (10) comprend deux réceptions (16) sur des côtés opposés l'un à l'autre, dans lesquelles deux des rails de montage (19) sont logés sur les côtés opposés l'un à l'autre de l'autre rail de montage (20, 21), et **en ce que** les deux réceptions en forme de U (16) sont ouvertes dans la direction opposée de la même façon que le système de raccordement en forme de U (12).

11. Raccordement à noeuds selon la revendication 9, **caractérisé en ce que** le système de raccordement (12) est vissé à l'autre rail de montage (21).

12. Raccordement à noeuds selon la revendication 9, **caractérisé en ce que** le raccord à noeuds (10) destiné à fixer le rail de montage (19) comprend une contre-dépouille (18) et une boucle (34, 60), qui fixe la contre-dépouille (18) par mise en prise au raccord à noeuds (10) et chevauche le rail de montage (19).

13. Raccordement à noeuds selon la revendication 9, **caractérisé en ce que** le raccord à noeuds (10) comprend un système de serrage (34, 36 ; 52 ; 60, 64, 66) destiné à serrer fixement le rail de montage (19).

14. Raccordement à noeuds selon la revendication 13, **caractérisé en ce que** le système de serrage (34, 36, 52) comprend un élément excentrique (42 ; 56) destiné à serrer fixement le rail de montage (19).
